# EUROPEAN PATENT SPECIFICATION

(11) **EP 3 863 979 B1**
(45) Date of publication and mention of the grant of the patent: **26.04.2023**
(21) Application number: 19870161.7
(22) Date of filing: 03.10.2019
(51) Int. Cl.: C03C 3/097, C03C 3/087, C03B 17/06, C03C 3/091, C03C 3/093

(54) **METHOD FOR PREVENTING BAGGY WARP DEFECT**
VERFAHREN ZUR VERHINDERUNG VON BAUSCHIGEN KETTFEHLERN
MÉTHODE PERMETTANT DE PRÉVENIR LES DÉFAUTS DE BOURSOUFLURE

(30) Priority: 09.10.2018 US 201862743015 P
(43) Date of publication of application: 18.08.2021
(60) Divisional application: 23155656.4
(73) Proprietor: Corning Incorporated, Corning, New York 14831 (US)
(72) Inventor: GUO, Xiaoju, Painted Post, New York 14870 (US); MARKHAM, Shawn Rachelle, Harrodsburg, Kentucky 40330 (US); YU, Jae Hyun, New York 14814 (US)
(74) Representative: Elkington and Fife LLP
(86) International application number: PCT/US2019/054474
(87) International publication number: WO 2020/076604

(56) References cited:
- EP-A2- 1 375 440
- WO-A1-2008/143999
- WO-A1-2010/014163
- WO-A2-2015/031427
- WO-A2-2018/085274
- CN-A- 101 456 670
- US-A1- 2012 134 025
- US-A1- 2016 251 256
- US-A1- 2018 127 302
- US-A1- 2018 127 303

## Description

### BACKGROUND

This disclosure relates to glass compositions and methods for preventing baggy warp defect.

When a glass composition is processed in a fusion down draw machine, molten glass flows into a forming apparatus comprising a forming body (also referred to herein as an "isopipe). The forming body can comprise a trough positioned in an upper surface of the forming body and converging forming surfaces that converge in a draw direction along a bottom edge (i.e., the "root") of the forming body. Molten glass delivered to the forming body trough overflows side walls (or "weirs") of the trough and descends along the converging forming surfaces as separate flows of molten glass. The separate flows of molten glass join at the root to produce a single ribbon of glass that is drawn by applying tension to the glass ribbon, such as by gravity, edge rolls and pulling rolls, to control the dimensions of the glass ribbon as the glass cools and a viscosity of the glass increases. When the glass composition, initially in the molten state at a high temperature, is exposed to a lower temperature for a significant amount of time while being processed in the fusion draw machine, the growth of crystal phases can initiate. The temperature and viscosity where these crystal phases start to grow is known as the liquidus temperature and liquidus viscosity, respectively. It is generally desired to process a glass composition such that its viscosity during processing does not exceed the liquidus viscosity. In certain glass compositions, particularly glass compositions with relatively low liquidus viscosities, typically, the viscosity of the glass composition at the root ("root viscosity") is reduced so that liquidus viscosity is avoided.

When reducing the viscosity of the glass composition at the root, however, certain glass compositions will exhibit a root viscosity that is below a value that will allow a positive pull force to be applied at the pulling rollers, and the glass will deform out of a flat plane. This phenomenon is known as baggy warp defect. Glass compositions continue to evolve with the use of new raw materials to improve glass performance. As the chemistry of a glass composition is adjusted, the liquidus viscosity can shift below the viscosity for stable forming conditions based on pull force.

There remains a need to identify and select glass compositions and methods of processing such glass compositions in a fusion down draw machine to prevent baggy warp defect. Avoiding baggy warp is particularly needed when a glass composition is processed at relatively low root viscosities that avoid approaching liquidus temperature and liquidus viscosity, so as to avoid the initiation of growth of crystal phase in the glass.
US 2018/127303 A1 and WO 2018/085174 A2 are directed to thin, low-viscosity and lithium-containing glasses. WO 2008/143999 A1 is directed to high strength, down-drawn alkali aluminosilicate glass.

### SUMMARY

The present invention relates to a method of manufacturing a glass sheet from a glass composition processed in a fusion down draw machine using pulling rollers, the method including determining (i) a liquidus viscosity of the glass composition, and (ii) a root viscosity of the glass composition at a root viscosity temperature for the glass composition at a root formed during a fusion down draw process, selecting one or more target downstream viscosities downstream from the root for the glass composition, said target downstream viscosities being higher in magnitude than said root viscosity, and lower in magnitude than said liquidus viscosity, and determining a temperature gradient to achieve the one or more target downstream viscosities in the glass composition, as compared to the root viscosity temperature for the glass composition, and comparing said temperature gradient to achieve any one of the one or more target downstream viscosities to a reference temperature gradient to achieve the target downstream viscosity in a second, reference glass composition at the root viscosity temperature in the fusion down draw machine, the second, reference glass composition known to avoid baggy warp defect. If any of the temperature gradients for any of the target viscosities is lower in magnitude than the reference temperature gradient to achieve the target viscosity in the second, reference glass composition, flowing the glass composition in a molten state over converging forming surfaces to form a glass ribbon, and rotating the pulling rollers to draw the glass ribbon to manufacture the glass sheet.

Additional features and advantages will be set forth in the detailed description which follows, and in part will be readily apparent to those skilled in the art from that description or recognized by practicing the embodiments as described herein, including the detailed description which follows, the claims, as well as the appended drawings.

It is to be understood that both the foregoing general description and the following detailed description are merely exemplary, and are intended to provide an overview or framework to understanding the nature and character of the claims. The accompanying drawings are included to provide a further understanding, and are incorporated in and constitute a part of this specification. The drawings illustrate one or more embodiment(s), and together with the description serve to explain principles and operation of the various embodiments.

### BRIEF DESCRIPTION OF THE DRAWINGS

FIG. 1 is a perspective, partial cross-sectional view of a fusion down draw machine;
FIG. 2 is a graphical depiction of the temperature gradients required to increase the viscosity of a plurality of glass compositions from 8.5 kPa.s to 20 kPa.s (85 kilopoise (kP) to 200 kP), and from 8.5 kPa.s to 50 kPa.s (85kP to 500 kP); and
FIG. 3 is a graphical depiction of the temperature gradient to increase the viscosity of a plurality of glass compositions from 8 kPa.s (80 kP) to several higher viscosities.

### DETAILED DESCRIPTION

Reference will now be made in detail to various embodiments, examples of which are illustrated in the accompanying examples and drawings.

It is noted that the terms "substantially" and "about" may be utilized herein to represent the inherent degree of uncertainty that may be attributed to any quantitative comparison, value, measurement, or other representation. These terms are also utilized herein to represent the degree by which a quantitative representation may vary from a stated reference without resulting in a change in the basic function of the subject matter at issue.

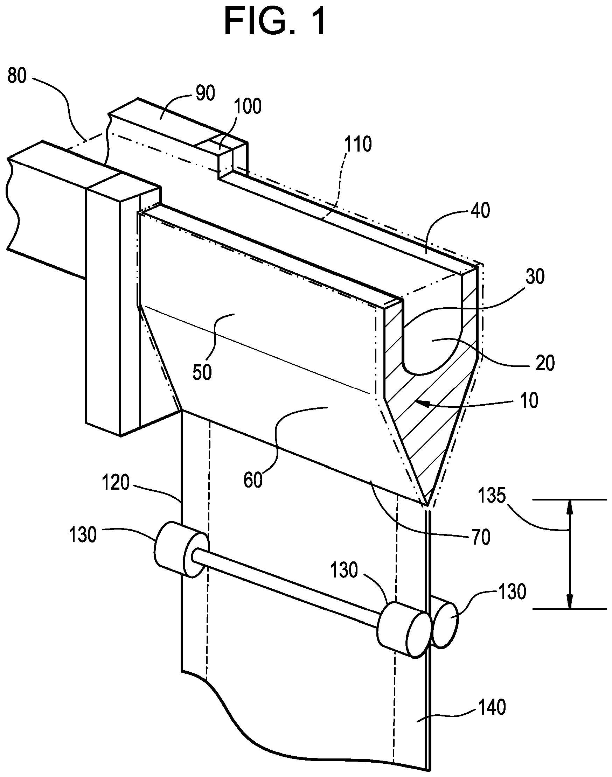

A fusion down draw machine is shown in FIG. 1, wherein an overflow trough member or forming body 10 includes an upwardly open trough 20 bounded on its longitudinal sides by wall portions 30, which terminate at their upper extent in opposed longitudinally-extending overflow side walls or weirs 40. The weirs 40 communicate with opposed outer sheet forming surfaces of forming body 10. As shown, forming body 10 is provided with a pair of substantially vertical forming surface portions 50 which communicate with weirs 40, and a pair of downwardly inclined converging surface portions 60 which terminate at a substantially horizontal lower apex or root 70 forming a glass draw line.

Molten glass 80 is fed into trough 20 by means of delivery passage 90 communicating with trough 20. The feed into trough 20 may comprise a single end or, if desired, a double end. A pair of restricting dams 100 are provided above overflow weirs 40 adjacent each end of trough 20 to direct the overflow of the free surface 110 of molten glass 80 over overflow weirs 40 as separate streams, and down opposed forming surface portions 50, 60 to root 70 where the separate streams, shown in chain lines, converge to form a sheet of virgin-surfaced glass 120. In the fusion process, pulling rollers 130 are placed downstream of the root 70 of forming body 10, pulling rollers 130 being spaced at a pulling roller distance 135 from the root 70. The pulling rollers 130 are used to adjust the rate at which the formed ribbon of glass leaves the converging forming surfaces and thus help determine the nominal thickness of the finished sheet. Suitable pulling rollers are described, for example, in U.S. Pat. No. 6,896,646.

In one or more embodiments, the pulling rollers are designed to contact the glass ribbon at its outer edges, specifically, in regions just inboard of the thickened beads which exist at the very edges of the ribbon. The glass edge portions 140 which are contacted by the pulling rollers are later discarded from the substrates after they are separated from the sheet.

Depending on the particular glass composition at issue, the viscosity of a glass sheet processed on a fusion down draw machine can shift below the viscosity for stable forming conditions based on pull force. Pull force is a function of unsupported glass weight between the root of the isopipe and the pulling rollers. As discussed above, if the root viscosity is below a value to provide a positive pull force at the pulling rollers, the glass will deform out of a flat plane, a phenomenon known as baggy warp defect.

On the other hand, if in attempting to avoid baggy warp defect, the root viscosity is increased too much, the viscosity of the glass composition during processing may surpass the liquidus viscosity during processing, in which case devitrification will occur in the glass sheet and/or on the edge directors, which in turn may cause product loss.

According to the invention, it has been determined that certain glass compositions can be processed at relatively low root viscosities, and due to their ability to achieve higher viscosities upon being cooled by a specific temperature gradient, as compared to other glass compositions being cooled by that same specific temperature gradient, these glass compositions can still avoid baggy warp defect. Thus, glass compositions are identified and selected to provide a glass composition which exhibits a relatively rapid glass viscosity increase between the root and pulling rollers, and will be less susceptible to and can prevent baggy warp defect.

The magnitude of impact of the viscosity increase is related to the distance below the root in which the viscosity increase occurs. Viscosity increases close to the root provides the largest gain in pull force for the same root viscosity. U.S. Patent No. 8,429,936 provides further discussion on pulling force and distances from the root.

The current method of addressing the baggy warp defect while avoiding liquidus viscosity during processing on a fusion down draw machine is to limit possible glass compositions to those with liquidus viscosities sufficiently higher than what is referred to as the baggy warp viscosity limit, particularly when processing glass sheets with thicknesses greater than 0.7 mm, greater than 0.8 mm, or greater than 0.9 mm. This current method results in the elimination of a large number of glass compositions having low liquidus viscosities from consideration, even though these glass compositions could otherwise be processable to obtain beneficial properties. It has been discovered that compositions with low liquidus viscosities, but having an appropriate viscosity curve slope, can be processed in a fusion down draw machine to form glass sheets having relatively high thicknesses (e.g., greater than 0.7 mm and less than 50 mm, greater than 0.8 mm and less than 50 mm, greater than 0.9 mm and less than 50 mm, greater than 1 mm and less than 50 mm), while still avoiding baggy warp defect.

"Viscosity curve slope," as used herein, refers to the temperature gradient to increase the viscosity, for example, from the root viscosity, to a higher viscosity at one of several positions between the root and the pulling rollers, and to the viscosity of the glass composition at the pulling rollers, when processed in a fusion down draw machine. As described in greater detail below in the Example, when the temperature of a particular composition is reduced by a temperature gradient caused by cooling the glass composition, a viscosity curve slope that avoids baggy warp will achieve higher marginal increases in viscosity, as compared to a marginal increase in viscosity achieved by compositions that do not have a viscosity curve slope that prevents baggy warp. Thus, an advantage of compositions with a viscosity curve slope that avoids baggy warp is that smaller temperature changes are needed to increase the stiffness of the glass composition as it is processed in a fusion down draw machine.

During processing on a fusion down draw machine, the increase in stiffness that occurs upon decreasing the root temperature of the glass composition as the composition is processed downstream from the root occurs down the draw and across the draw. For the same temperature gradient across the root (perpendicular to the flow of the glass), the viscosity on the ends (measure of glass stiffness) of the glass ribbon increases faster than in center of the root. Furthermore, when processing glass sheets with relatively narrower widths on a fusion down draw machine, the ends represent a larger percentage of the total width. Accordingly, it is easier to avoid baggy warp defect when processing glass sheets with narrower widths. When processing glass sheets that are wider and thicker, it is marginally more difficult to avoid the baggy warp defect.

Compositions having a viscosity curve slope that prevents baggy warp will enable smaller temperature gradients vertically to help minimize baggy warp. High thermal extraction rates through radiation can cause larger across-the-ribbon temperature gradients when the across the draw thickness is not uniform. In glasses with viscosity curve slopes that do not prevent baggy warp, a larger amount of thermal extraction is needed to increase viscosity by the same relative amount. When cooling the glass composition directly after it exits the root of the isopipe, the pull force can be increased for the same root temperature.

Characteristics of compositions that can exhibit a viscosity curve slope that can prevent baggy warp defect will now be described.

In industrial silicate glasses, SiO₂ serves as a primary glass-forming oxide. The concentration of SiO₂ should be sufficiently high in order to provide the glass with sufficiently high chemical durability suitable for consumer applications. However, the glasses can't contain too much SiO₂ since the melting temperature (20 Pa.s (200 poise) temperature) of pure SiO₂ or high-SiO₂ glasses is too high. Furthermore, high SiO₂ content generally generates a glass with a shallow viscosity curve, namely the temperature change between two fixed viscosity points is high. For purposes of embodiments of the present disclosure, the SiO₂ content needs to be reasonably low, 50-75 mol%, for example 50-70 mol%.

Al₂O₃ can also serve as a glass former in glass compositions. Like SiO₂, Al₂O₃ generally increases the viscosity of the melt and an increase in Al₂O₃ relative to the alkalis or alkaline earths generally results in improved durability. The structural role of the aluminum ions depends on the glass composition. When the concentration of alkali oxide (R₂O) is close to or greater than the concentration of alumina (Al₂O₃) all aluminum is found in tetrahedral coordination with the alkali ions acting as charge-balancers. However, high Al₂O₃ concentrations generally lower the liquidus viscosity. According to one or more embodiments, the Al₂O₃ concentration can be about 5-20 mol%, for example, about 8-20 mol%.

Alkali oxides (e.g., Li₂O, Na₂O, and K₂O) serve as aids in achieving low melting temperature and low liquidus temperatures. On the other hand, addition of alkali oxide dramatically increases the coefficient of thermal expansion (CTE) and lowers the chemical durability of the glass sheet. To perform ion exchange, the presence of a small alkali oxide (such as Li₂O and Na₂O) is required to exchange with larger alkali ions (e.g., K⁺) from a salt bath. Three types of ion exchange can generally be carried out:
1. Na⁺-for-Li⁺ exchange, which results in a deep depth of layer but low compressive stress;
2. K⁺-for-Li⁺ exchange, which results in a small depth of layer but a relatively large compressive stress; and
3. K⁺-for-Na⁺ exchange, which results in intermediate depth of layer and compressive stress.

In some embodiments, sufficiently high concentration of small alkali oxides (e.g., lithium and sodium) produce a large compressive stress in the glass, as compressive stress is proportional to the number of alkali ions that are exchanged out of the glass. In some embodiments, small alkali oxides are present in a range of from about 10 to about 20 mol%.

Divalent cation oxides (such as alkaline earth oxides, e.g., MgO, ZnO, SrO and CaO) also improve the melting behavior of the glass, but with respect to ion exchange performance, the presence of divalent cations acts to decrease alkali mobility. The negative effect on ion exchange performance is especially pronounced with the larger divalent cations. Furthermore, the smaller divalent cation oxides generally help the compressive stress more than the larger divalent cations. However, when the contents of MgO are high, they are prone to form forsterite (Mg₂SiO₄), thus causing the liquidus temperature to rise very steeply with the MgO contents above certain level. In some embodiments, presence of divalent oxides in a range of from about 2 to about 10 mol% aids in preventing the baggy warp defect.

The addition of B₂O₃ into the glasses can serve to improve the damage resistance of the glass (e.g., can provide a glass with a high indentation threshold). When boron is not charge-balanced by alkali oxides or divalent cation oxides, it will be in trigonal coordination state, and thus open up the structure. The network around the trigonal coordinated boron is not as rigid as tetrahedrally coordinated ones, and therefore, the glasses can tolerate some deformation before crack formation. See, e.g., U.S. Pat. No. 8,946,103. Furthermore, boron decreases the melting viscosity and effectively helps suppress zircon breakdown viscosity. In some embodiments, the glasses are free of boron oxide.

With respect to the viscosity curve slope, the high field strength cations are advantageous in providing glass compositions with a viscosity curve slope that avoids baggy warp defect. In certain embodiments, the glass composition includes a high field strength cation selected from magnesium, calcium, strontium, lithium, zirconium, tantalum, yttrium, lanthanum and combinations thereof. In one embodiment, the high field strength cation is selected from magnesium, calcium, strontium, lithium and combinations thereof.

As described above, a viscosity curve slope that avoids baggy warp defect requires less cooling in the fusion down draw machine below the root of the isopipe. A glass with high content of high field strength cations and a relatively low content of SiO₂ can provide glass compositions with viscosity curve slopes that avoids baggy warp defect. Suitable ranges of high field strength cations according to one or more embodiments include from about 5 to about 25 mol%.

As used herein, ionic field strength is defined as the charge of an ion divided by the square of its ionic radius. It is essentially a measure of the strength of the electrostatic field created by the ion when the ion is considered as a point charge in space. For example, the common ionic state of potassium is +1 with an ionic radius of 1.33 A (A=angstrom), yielding an ionic field strength of (+1/(1.33^{∗}1.33)=0.57. Sodium, with an equal ionic charge yet smaller ionic radius of 0.97 A has a higher field strength of 1.06. In general, higher ionic charges and/or smaller ionic radius will contribute to higher ionic field strengths.

### EXAMPLE

A plurality of glass compositions (A-O) were provided having the components set forth below in Table 1.

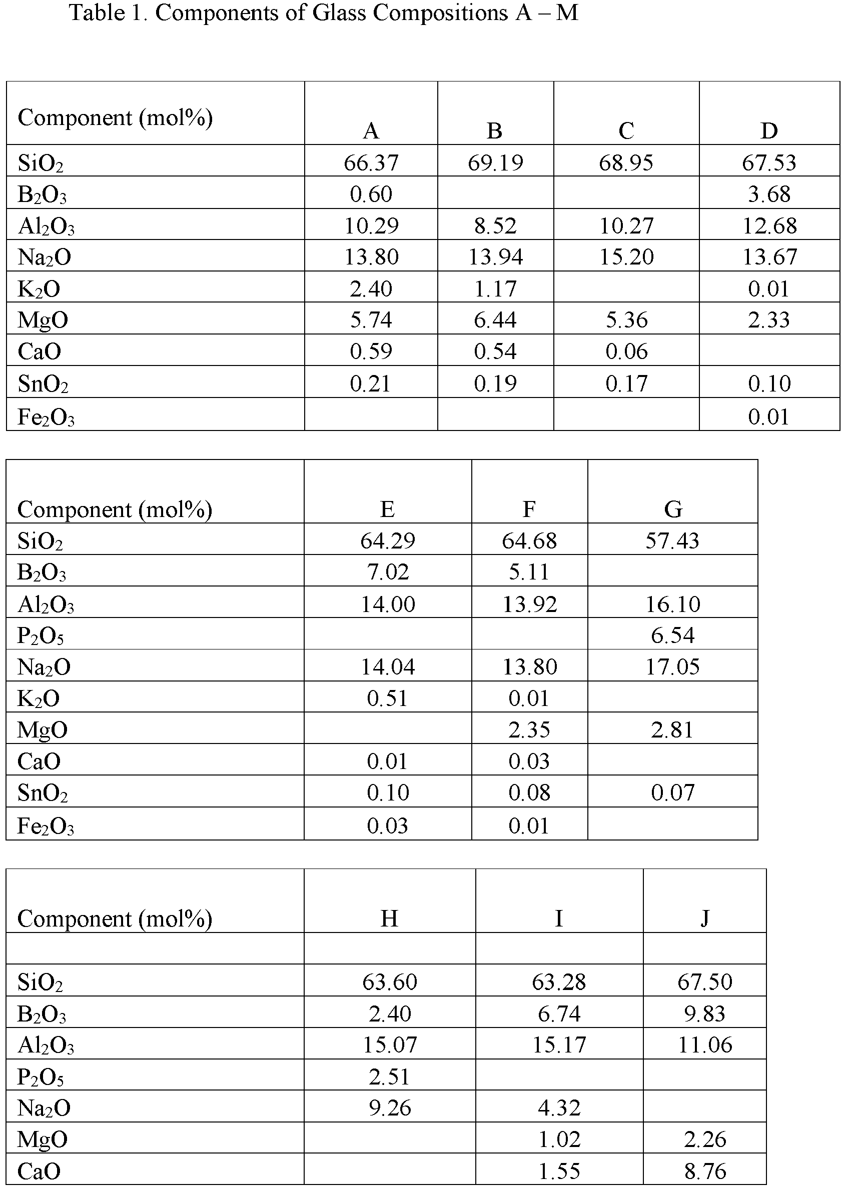

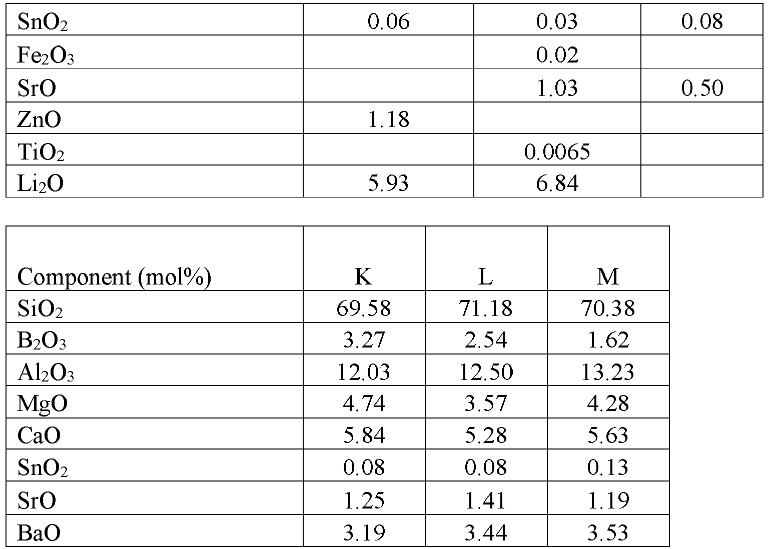

The glass compositions were each processed on a fusion down draw machine of the type shown in FIG. 1, in which the respective glass composition was provided in a molten state and flowed down the forming surfaces of the fusion down draw machine until converging at a root. From the root, the glass composition flowed downward by gravity and approached pulling rollers. The glass compositions were drawn by rotating the pulling rollers, which are located downstream from the root.

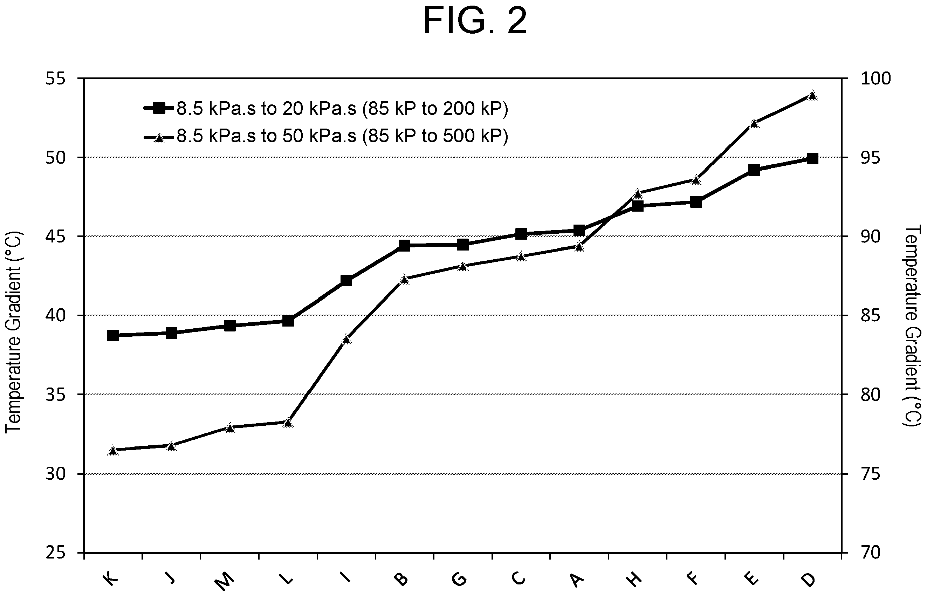

For each of the glass compositions, the temperature gradient (i.e., the reduction of the glass composition's temperature) to increase the viscosity of the glass composition from 8.5 kPa.s to 20 kPa.s (85 kP to 200 kP), and to 50 kPa.s (500 kP) (i.e., the viscosity curve slope) was recorded, and the results are set forth in FIG. 2. In FIG. 2, the left y-axis refers to the temperature gradient required to increase the viscosity of the glass composition from 8.5 kPa.s to 20 kPa.s (85 kP to 200 kP) and the right y-axis refers to the temperature gradient required to increase the viscosity of the glass composition from 8.5 kPa.s to 50 kPa.s (85 kP to 500 kP).

As shown in FIG. 2, amongst the alkali glass compositions, composition K exhibited the lowest temperature gradient to increase the viscosity from 8.5 kPa.s (85 kilopoise (kP)) (root viscosity) to a higher viscosity (20 kPa.s and 50 kPa.s (200 kP and 500 kP)). For example, as shown in FIG. 2, viscosity of composition K increased from 8.5 kPa.s to 20 kPa.s (85 kP to 200 kP) with a temperature reduction of less than 35 °C (see FIG. 2, left axis). Furthermore, the viscosity of composition K increased from 8.5 kPa.s to 50 kPa.s (85 kP to 500 kP) with a temperature reduction of less than 80 °C (see FIG. 2, right axis).

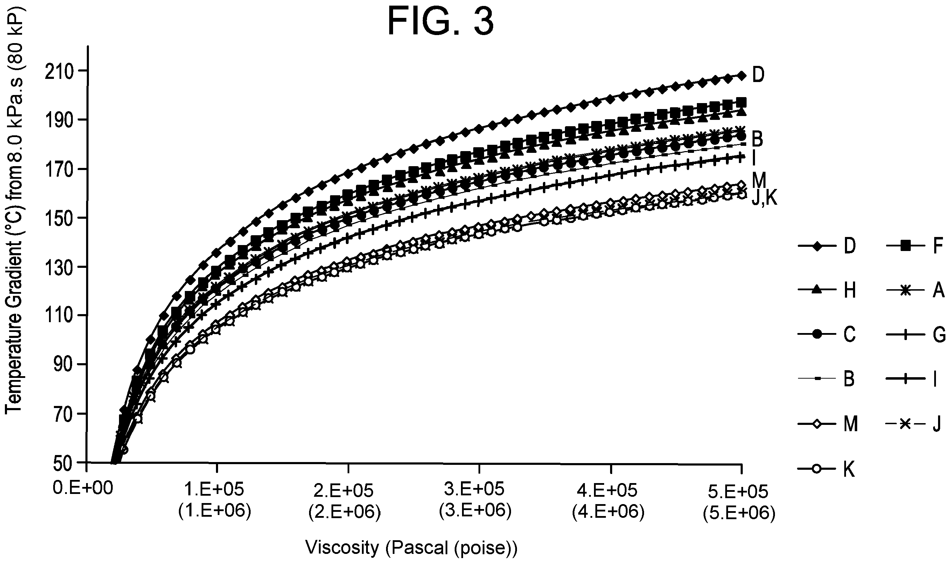

FIG. 3 depicts a plot of the temperature gradient to increase the root viscosity of glass compositions (8 kPa.s (80 kP)) to several higher viscosities, up to 5 X 10⁵ Pa.s (5 X 10⁶ poise) (i.e., the viscosity curve slope). The viscosity ranges plotted along the x-axis of FIG. 3 correspond to the higher viscosity (relative to the root) of the glass at several positions between the root and the pulling rollers, and the viscosity at the pulling rollers, when processed in a fusion down draw machine. These results were obtained by the same procedure as described above with respect to FIG. 2.

As shown in FIG. 3, Composition D exhibited the highest temperature gradient to increase the viscosity from the root viscosity (8 kPa.s (80 kP)) to the several higher viscosities. Composition D has a viscosity curve slope that does not prevent baggy warp defect. Compositions J and K, to the contrary, exhibited the lowest temperature gradient to increase the viscosity from the root viscosity (8 kPa.s (80 kP)) to the several higher viscosities. Composition J and K has a viscosity curve slope that prevents baggy warp defect. In this Example, it was found that Composition I, and all compositions with temperature gradients lower than Composition I at the given viscosities, all have a viscosity curve slope to avoid baggy warp defect (i.e. Compositions I, M, J and K). Compositions D, F, H, A, C, G and B have viscosity curve slopes that do not avoid baggy warp defect.

Table 2, below, depicts temperature gradients (Δ °C) to increase the viscosity of the glass compositions from a root viscosity (here 8.5 kPa.s (85 kP)) to higher viscosities, these higher viscosities corresponding to the viscosity of the glass at several positions between the root and the pulling rollers, and the viscosity at the pulling rollers, when processed in a fusion down draw machine. The data was obtained based by the same procedure as described above.

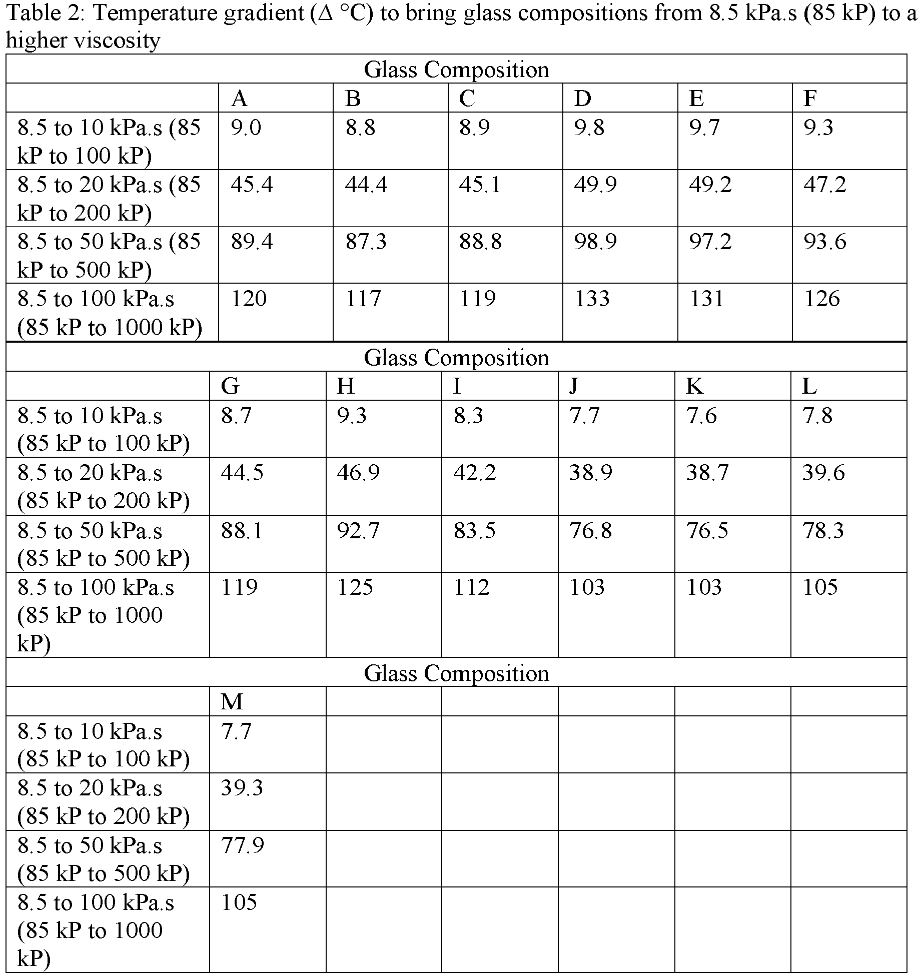

## Claims

1. A method of manufacturing a glass sheet from a glass composition processed in a fusion down draw machine using pulling rollers, the method comprising:
determining (i) a liquidus viscosity of the glass composition, and (ii) a root viscosity of the glass composition at a root viscosity temperature for the glass composition at a root formed during a fusion down draw process;
selecting one or more target downstream viscosities downstream from the root for the glass composition, said target downstream viscosities being higher in magnitude than said root viscosity, and lower in magnitude than said liquidus viscosity;
determining a temperature gradient to achieve the one or more target downstream viscosities in the glass composition, as compared to the root viscosity temperature for the glass composition;
comparing said temperature gradient to achieve any one of the one or more target downstream viscosities to a reference temperature gradient to achieve the target downstream viscosity in a second, reference glass composition at the root viscosity temperature in the fusion down draw machine, the second, reference glass composition known to avoid baggy warp defect; and
if any of said temperature gradients for any of said target viscosities is lower in magniude than said reference temperature gradient to achieve the target viscosity in the second, reference glass composition, flowing the glass composition in a molten state over converging forming surfaces to form a glass ribbon, and rotating the pulling rollers to draw the glass ribbon to manufacture the glass sheet.

2. The method of claim 1, wherein the root viscosity is in a range of from 7 kPa.s to 9 kPa.s (70 kP to 90 kP) and the one or more target downstream viscosities is in the range of from 9 kPa.s (90 kP) to 1 X 10⁷ kPa.s (1 X 10⁸ kP).

3. The method of claim 2, wherein the root viscosity is in a range of from 8 kPa.s to 8.5 kPa.s (80 kP to 85 kP).

4. The method of claim 2, wherein the reference temperature gradient to achieve a target downstream viscosity of 10 kPa.s (100 kP) is 8.5 °C.

5. The method of claim 2, wherein the reference temperature gradient to achieve a target downstream viscosity of 20 kPa.s (200 kP) is 43 °C.

6. The method of claim 2, wherein the reference temperature gradient to achieve a target downstream viscosity of 50 kPa.s (500 kP) is 85 °C.

7. The method of claim 2, wherein the reference temperature gradient to achieve a target downstream viscosity of 100 kPa.s (1000 kP) is 115 °C.

## Patentansprüche

1. Verfahren zur Herstellung einer Glasscheibe aus einer Glaszusammensetzung, die unter Verwendung von Zugwalzen in einer Downdraw-Schmelzmaschine verarbeitet wird, wobei das Verfahren Folgendes umfasst:
Bestimmen (i) einer Liquidus-Viskosität der Glaszusammensetzung und (ii) einer Wurzelviskosität der Glaszusammensetzung bei einer Wurzelviskositätstemperatur für die Glaszusammensetzung an einer Wurzel, die während eines Downdraw-Schmelzprozesses gebildet wird;
Auswählen einer oder mehrerer stromabwärtiger Zielviskositäten stromabwärts von der Wurzel für die Glaszusammensetzung, wobei die stromabwärtigen Zielviskositäten eine höhere Größe als die Wurzelviskosität und eine niedrigere Größe als die Liquidus-Viskosität aufweisen;
Bestimmen eines Temperaturgradienten zum Erreichen der einen oder mehreren stromabwärtigen Zielviskositäten in der Glaszusammensetzung im Vergleich zu der Wurzelviskositätstemperatur für die Glaszusammensetzung;
Vergleichen des Temperaturgradienten zum Erreichen einer beliebigen der einen oder mehreren stromabwärtigen Zielviskositäten mit einem Referenztemperaturgradienten zum Erreichen der stromabwärtigen Zielviskosität in einer zweiten Referenzglaszusammensetzung bei der Wurzelviskositätstemperatur in der Downdraw-Schmelzmaschine, wobei von der zweiten Referenzglaszusammensetzung bekannt ist, dass sie bauschige Kettfehler vermeidet; und
wenn ein beliebiger der Temperaturgradienten für eine beliebige der Zielviskositäten eine niedrigere Größe aufweist als der Referenztemperaturgradient zum Erreichen der Zielviskosität in der zweiten Referenzglaszusammensetzung, Strömenlassen der Glaszusammensetzung in geschmolzenem Zustand über konvergierende Formflächen, um ein Glasband zu formen, und Drehen der Zugwalzen, um das Glasband zu ziehen, um die Glasscheibe herzustellen.

2. Verfahren nach Anspruch 1, wobei die Wurzelviskosität in einem Bereich von 7 kPa.s bis 9 kPa.s (70 kP bis 90 kP) liegt und die eine oder mehreren stromabwärtigen Zielviskositäten im Bereich von 9 kPa.s (90 kP) bis 1 X 10⁷ kPa.s (1 X 10⁸ kP) liegen.

3. Verfahren nach Anspruch 2, wobei die Wurzelviskosität in einem Bereich von 8 kPa.s bis 8,5 kPa.s (80 kP bis 85 kP) liegt.

4. Verfahren nach Anspruch 2, wobei der Referenztemperaturgradient zum Erreichen einer stromabwärtigen Zielviskosität von 10 kPa.s (100 kP) 8,5 °C beträgt.

5. Verfahren nach Anspruch 2, wobei der Referenztemperaturgradient zum Erreichen einer stromabwärtigen Zielviskosität von 20 kPa.s (200 kP) 43 °C beträgt.

6. Verfahren nach Anspruch 2, wobei der Referenztemperaturgradient zum Erreichen einer stromabwärtigen Zielviskosität von 50 kPa.s (500 kP) 85 °C beträgt.

7. Verfahren nach Anspruch 2, wobei der Referenztemperaturgradient zum Erreichen einer stromabwärtigen Zielviskosität von 100 kPa.s (1000 kP) 115 °C beträgt.

## Revendications

1. Procédé de fabrication d'une feuille de verre à partir d'une composition de verre traitée dans une machine d'étirage vers le bas à l'état fondu à l'aide des rouleaux de traction, le procédé comprenant :
la détermination (i) d'une viscosité de liquidus de la composition de verre, et (ii) une viscosité de bourrelet de la composition de verre à une température de viscosité de bourrelet pour la composition de verre au niveau d'un bourrelet formé durant un processus d'étirage vers le bas à l'état fondu ;
la sélection d'une ou de plusieurs viscosités en aval cibles en aval du bourrelet pour la composition de verre, lesdites viscosités en aval cibles étant supérieures en amplitude à ladite viscosité de bourrelet, et inférieures en amplitude à ladite viscosité de liquidus ;
la détermination d'un gradient de température pour obtenir la ou les viscosités en aval cibles dans la composition de verre, par rapport à la température de viscosité de bourrelet pour la composition de verre ;
la comparaison dudit gradient de température pour obtenir l'une quelconque de la ou des viscosités en aval cibles à un gradient de température de référence pour obtenir la viscosité en aval cible dans une seconde composition de verre de référence à la température de viscosité de bourrelet dans la machine d'étirage vers le bas à l'état fondu, la seconde composition de verre de référence étant connue pour éviter les défauts de boursouflure ; et
si l'un quelconque desdits gradients de température pour l'une quelconque desdites viscosités cibles est inférieur en amplitude audit gradient de température de référence pour obtenir la viscosité cible dans la seconde composition de verre de référence, l'écoulement de la composition de verre à l'état fondu sur des surfaces de formage convergentes pour former un ruban de verre, et la rotation des rouleaux de traction pour étirer le ruban de verre afin de fabriquer la feuille de verre.

2. Procédé selon la revendication 1, ladite viscosité de bourrelet étant comprise dans une plage allant de 7 kPa.s à 9 kPa.s (70 kP à 90 kP) et ladite ou lesdites viscosités en aval cibles étant comprises dans la plage allant de 9 kPa.s (90 kP) à 1 X 10⁷ kPa.s (1 X 10⁸ kP).

3. Procédé selon la revendication 2, ladite viscosité de bourrelet étant comprise dans une plage allant de 8 kPa.s à 8,5 kPa.s (80 kP à 85 kP).

4. Procédé selon la revendication 2, ledit gradient de température de référence pour obtenir une viscosité en aval cible de 10 kPa.s (100 kP) étant de 8,5°C.

5. Procédé selon la revendication 2, ledit gradient de température de référence pour obtenir une viscosité en aval cible de 20 kPa.s (200 kP) étant de 43°C.

6. Procédé selon la revendication 2, ledit gradient de température de référence pour obtenir une viscosité en aval cible de 50 kPa.s (500 kP) étant de 85°C.

7. Procédé selon la revendication 2, ledit gradient de température de référence pour obtenir une viscosité en aval cible de 100 kPa.s (1000 kP) étant de 115°C.
